# EUROPÄISCHE PATENTSCHRIFT

(11) **EP 1 440 246 B1**
(45) Veröffentlichungstag und Bekanntmachung des Hinweises auf die Patenterteilung: **09.12.2009**
(21) Anmeldenummer: 02783014.0
(22) Anmeldetag: 25.10.2002
(51) Int. Cl.: F16B 47/00, F16B 37/04

(54) **MONTAGESYSTEM ZUR ANBRINGUNG VON BEFESTIGUNGSELEMENTEN AN EINER WAND**
MOUNTING SYSTEM FOR FITTING FIXING ELEMENTS ON A WALL
SYSTEME DE MONTAGE SERVANT A L'APPLICATION D'ELEMENTS DE FIXATION SUR UNE PAROI

(30) Priorität: 25.10.2001 DE 10152052
(43) Veröffentlichungstag der Anmeldung: 28.07.2004
(73) Patentinhaber: nie wieder bohren ag, 63450 Hanau (DE)
(72) Erfinder: Ortwein, Ernst Georg, 73061 Ebersbach (DE)
(74) Vertreter: Fürst, Siegfried
(86) Internationale Anmeldenummer: PCT/EP2002/011966
(87) Internationale Veröffentlichungsnummer: WO 2003/036106

(56) Entgegenhaltungen:
- DE-A- 4 416 884
- DE-A- 10 120 388
- US-A- 5 121 896
- US-A- 6 099 193

## Beschreibung

Die Erfindung betrifft ein Montagesystem zur Anbringung von Befestigungselementen an einer Wand, insbesondere in mit Kacheln, Marmorplatten oder mit dergleichen Wandverkleidungen ausgestatteten Räumen, wobei das Befestigungselement zur Halterung von ortsfesten Gegenständen, wie Handtuchhaltern, Regalen oder dergleichen Ausstattungsartikeln ausgebildet ist.

Aus dem Stand der Technik sind eine Vielzahl von Montagesystemen zur Anbringung von Befestigungselementen der unterschiedlichsten Ausbildungsformen und Materialien an Wänden im Sanitär- und Küchenbereich bekannt, wobei insbesondere für derartige Wände und deren Wandverkleidungen in Form von Kacheln oder Marmorplatten das Problem darin besteht, dass die Befestigungselemente bei einer Kachelwand beispielsweise in traditioneller Weise zwischen den Kacheln in die Fugen, insbesondere im Bereich der Fugenkreuze durch Bohrungen befestigt werden, wobei die an die jeweilige Fuge angrenzenden Kacheln oftmals beschädigt werden, aussplittern oder deren Glasur einreißt, was neben optisch wahrnehmbaren Qualitätseinbußen auch Spätschäden verursacht, verbunden mit aufwändigen Nacharbeiten oder, dass bei einer örtlichen Verlegung der Befestigungsstelle oder bei Fehlmontagen an unübersichtlichen Bereichen, wie Ecken und Kanten neben einer schwierigen Anbringung der Befestigungselemente unschöne, wieder zu schließende, Dübellöcher entstehen. Aus diesem Grunde werden die Befestigungselemente vielfach mittels der verschiedenartigsten Klebverbindungen befestigt, die aber den Anforderungen genügen müssen, dass die Befestigungselemente größere Kräfte aufnehmen müssen zur Aufnahme von weiteren Halterungselementen in Form von ortsfesten Gegenständen, wie Handtuchhaltern, Regalen usw. unter Berücksichtigung der konstruktiven und statischen Bedingungen, wie Festigkeit des Klebstoffes, Festigkeit des Befestigungselementes, Flächenbelastung des Montagesystems und der Aufbau der Wandsysteme.

Aus der DE 44 16 884 A1 ist eine Vorrichtung zur mechanischen Befestigung eines Solargenerator-Moduls auf einer Unterkonstruktion mittels eines Klebers bekannt. Bei dieser Vorrichtung wird eine Halteplatte (ein Befestigungselement) mittels eines Klebstoffes an einem Abschnitt einer vorbestimmten Fläche des Solargenerator-Moduls befestigt. Die Halteplatte wird zunächst mit einer ihrer Flächen an bzw. auf den betreffenden Abschnitt besagter Fläche aufgelegt. Zur Erzeugung eines Klebespaltes sind zwischen den betreffenden Flächen der Halteplatte und der Auflagefläche ein oder mehrere Kunststoff-Formteile angeordnet, zwecks Erzeugung eines Klebespaltes zwischen beiden Flächen. Die Halteplatte besitzt eine Durchgangsöffnung zur Einbringung von Klebstoff von außen in den Klebespalt hinein. Zudem ist in der Halteplatte wenigstens eine Entlüftungsbohrung vorgesehen, damit die im Klebespalt enthaltene Luft beim Eindrücken von Klebstoff in den Klebespalt entweichen kann, sodass der Klebstoff den gesamten Klebespalt ausfüllen kann. Diese, von dem Klebespalt weggeführte, Entlüftungsbohrung ist zugleich Kontrollinstrument betreffend der vollständigen Ausfüllung des Klebespaltes mit Klebstoff. Wenn aus dieser Entlüftungsbohrung Klebstoff austritt, ist der Klebespalt vollständig mit Kleber gefüllt. Damit die in der Halteplatte als Gewindebohrung vorgesehene Durchgangsöffnung, welche zum Anschluss des Solargenerator-Moduls an eine Unterkonstruktion dient, nicht durch den Klebstoff unbrauchbar wird, ist bei dieser Vorrichtung in der Gewindebohrung eine spezielle Schraube zeitweilig angeordnet. Diese Schraube weist eine Durchgangsbohrung auf, durch die hindurch Klebstoff bis in den Klebespalt injiziert werden kann.

Durch das Vorsehen einer zusätzlichen speziellen Schraube ist der gerätetechnische Aufwand für dieses System zur Montage eines Solaregenerator-Moduls an einer Unterkonstruktion aufwendig. Nur durch das Anordnen eines elastischen Kunststoff-Formteiles zwischen der Halteplatte und der betreffenden Fläche des Solargenerator-Moduls werden die beim Aushärten des Klebstoffes auftretenden SchrumpfSpannungen wesentlich eliminiert. Dadurch dass der Klebespalt nach außen hin abgeschottet ist, können nur ganz bestimmte Klebstoffe verwendet werden.

Ausgehend von diesem Stand der Technik liegt der Erfindung die Aufgabe zugrunde, ein Montagesystem zur Anbringung von Befestigungselementen an einer Wand, insbesondere in mit Kachelwänden bzw. gefliesten Wänden ausgestatteten Räumen, zu schaffen, bei dem einerseits die beschriebenen Nachteile des Standes der Technik mit einfachen Mitteln beseitigt werden sowie anderseits die Befestigungselemente leicht montierbar sind, letztere sollen des weiteren kostengünstig herstellbar sein.

Zur Lösung dieser Aufgabe schlägt die Erfindung ein Montagesystem mit den Merkmalen des Patentanspruches 1 vor, bestehend aus einem Befestigungselement und einem Haft- und Verbindungsmittel, wobei das Befestigungselement einen Grundkörper aufweist und zur Aufnahme eines Elementes zur Halterung des Gegenstandes ausgebildet ist, und der Grundkörper an seiner zur Wand zeigenden Rückseite eine Ausnehmung und eine in letztere einmündende Einfüllöffnung besitzt, für die Einbringung des Haft- bzw. Verbindungsmittels zwischen das Befestigungselement und der Wand.
Das Befestigungselement besitzt für das Entweichen der von dem in die Ausnehmung eingebrachten Haft- bzw. Verbindungsmittel verdrängten Luft wenigstens eine flüssigkeits- und gasdurchlässige Öffnung, die von der Ausnehmung bis in eine weitere Oberfläche des Befestigungselementes reicht und die überschüssiges Haft- bzw. Verbindungsmittel aufnimmt.

In neuartiger Ausführung besteht der Grundkörper und/oder die der Wand zugewandte Rückseite des Grundkörpers zumindest in einem Teilbereich aus einem offenporigen Material und ist somit derart flüssigkeits- und/oder gasdurchlässig, dass das beim Aushärten in der Ausnehmung befindlichen Haft- und Verbindungsmittels entstehende Gas entweichen kann bzw. flüchtende Bindemittel ausdunsten können (Ausdunstung) und zugleich Umgebungsluft an das sich in der Ausnehmung befindende Haft- und Verbindungsmittel gelangt.

Als Haft- und Verbindungsmittel zwischen Wand und Grundkörper des Befestigungselementes ist, bevorzugt, ein Silikon-Dichtmittel vorgesehen.

Durch die Verwendung von offenporigem Material für zumindest von einem Teilbereich des Befestigungselementes kann somit ohne zusätzlichen Aufwand Luft und somit auch Luftfeuchte in erhöhter Menge dem Haft- und Verbindungsmittel zugeführt werden, da der Eintritt von Umgebungsluft zum Haft- und Verbindungsmittel hin sehr intensiv ist.
Bei Verwendung von Silikon-Dichtmittel ist dies besonders vorteilhaft. Zudem kann durch Befeuchten des offenporigen Bereiches des Befestigungselementes die Zufuhr von Luftfeuchte noch gesteigert werden.

In Weiterbildung der Erfindung wird ein nach dem Einfüllen in die Einfüllöffnung einsetzbares Verschlusselement zudem als Druckelement zum Einschieben des Haft- und Verbindungsmittels in die besagte Formstruktur und zum zumindest abschnittsweisen Ausdrücken von selbigen aus dem Einfüllkanal eingesetzt.

Bevorzugt ist zudem vorgesehen, dass die von der Wand abgewandte Vorderseite des Grundkörpers nach der Befüllung des Grundkörpers mit dem Haft- und Verbindungsmittel, bevorzugt nach dessen Ausdunstung oder Aushärtung, mittels eines Schutzelementes zumindest teilweise verkleidet wird.

Vorteilhaft ist, dass der Grundkörper insbesondere als einteilig rundes Formteil ausgebildet ist und jeweils zwischen den inSelbigem angeordneten (Steig-)Öffnungen einen Durchbruch aufweist.
Zudem ist bevorzugt vorgesehen, dass diese (Steig-)Öffnungen vorzugsweise konzentrisch um die Einfüllöffnung im Grundkörper angeordnet sind.

Eine bevorzugte Ausführungsform wird darin gesehen, dass ein in einer Ausnehmung in der Rückseite des Grundkörpers bevorzugt mechanisch befestigte flüssigkeits- und gasdurchlässige Element als Lochplatte ausgebildet ist.

Alternativ ist auch vorgesehen, dass ein in einer Ausnehmung in der Rückseite des Grundkörpers radial innen fest anliegendes flüssigkeits- und gasdurchlässige Element, als mindestens einlagig ausgebildete Gaze-Einlage vorgesehen ist.

Eine Weiterbildung ist darin zu sehen, dass das Haft- und Verbindungsmittel insbesondere bei mehrlagigen, in der Ausnehmung der Rückseite des Grundkörpers angeordneten Gaze-Einlagen, direkt durch die Gaze hindurchtritt, so dass weniger bzw. keine Steigöffnungen im Grundkörper notwendig sind, was den fertigungstechnischen Aufwand verringert.

Durch den Einsatz von nach Innen und nach Außen flüssigkeits- und/oder gasdurchlässiger Elemente wird erreicht, dass das beim Aushärten des Haft- und Verbindungsmittel entstehende Gas entweichen kann bzw. flüchtende Bindemittel ausdunsten können (Ausdunstung) und zugleich Umgebungsluft an das Haft- und Verbindungsmittel gelangt.

Eine weitere vorteilhafte Ausführungsform eines Befestigungsmittels wird darin gesehen, dass im Grundkörper vorzugsweise, konzentrisch zur Einfüllöffnung, mit einem schwammartigen, offenporigen Material gefüllte Durchgangsbohrungen angeordnet sind, so dass das überschüssige Haft- und Verbiridungsmittel direkt über die Poren des schwammartigen Materials, bevorzugt abschnittsweise, abfließt und gleichzeitig die in den Öffnungen des Grundkörpers vorhandene Luft sowie die beim Aushärten des Haft- und Verbindungsmittels entstehenden Gase entweichen können sowie auch hier Kontakt mit der Umgebungsluft gewährleistet ist.

Eine bevorzugte Variante wird darin gesehen, dass die Durchgangsbohrungen mit Gazematerial gefüllt sind.

Eine weitere bevorzugte Ausführungsform wird darin gesehen, dass in der Ausnehmung in der Rückseite des Grundkörpers ein Ring aus schwammartigem Material vorgesehen ist, dessen Auflagefläche zur Vorfixierung des Grundkörpers, in bekannter Art, eine Klebefläche aufweist und dessen Dicke die Begrenzung für eine Klebefuge bildet. Dieser Ring aus schwammartigem Material ermöglicht zudem das Entweichen der beim Aushärten des Haft- und Verbindungsmittels entstehenden Gase sowie die Luftzufuhr.

Neben den Vorteilen bezüglich eines besseren Einbringens des Haft- bzw. Verbindungsmittels besteht ein weiterer Vorteil der neuartigen Ausgestaltung des Grundkörpers auch darin, dass die Kontaktfläche zwischen Haft- bzw. Verbindungsmittel und dem Grundkörper um ein vielfaches gegenüber bekannten Lösungen erhöht wurde und somit zugleich die Belastbarkeit - aufnehmbare Kräfte -.

Eine bevorzugte sowohl fertigungstechnisch günstige, als auch materialsparende Ausgestaltung des Schutzelementes besteht darin, dass das Schutzelement kappenförmig ausgebildet und an dem Grundkörper lösbar befestigt ist sowie wenigstens ein Aufnahmeelement zur Halterung von Gegenständen aufweist. Weiterhin ist vorteilhaft vorgesehen, dass dieses kappenförmig ausgebildete Schutzelement zusätzlich oder alternativ eine Durchgangsöffnung aufweist, durch die ein Verbindungselement in den Grundkörper einbringbar ist oder, dass das kappenförmig ausgebildete Schutzelement als geschlossene Zierkappe vorgesehen ist, in die bei Bedarf auch Halteelemente, beispielsweise selbstschneidende Schrauben oder dergleichen Elemente einbringbar sind, die bei Bedarf auch in den Grundkörper eindringen können.

Das erfindungsgemäße Montagesystem zeichnet sich dadurch aus, dass die unterschiedlichen Ausführungsformen der Befestigungselemente unmittelbar auf einer Wand angebracht und daran unterschiedliche Gegenstände in bekannter Weise mechanisch befestigbar sind, so dass keine Bohrungen erforderlich sind, dass sich dadurch sowohl die Befestigungsmöglichkeiten für die Gegenstände erhöhen, als auch an unzugänglichen Wandabschnitten sowie Wänden der unterschiedlichsten Oberflächen Befestigungen vorgenommen werden können, ohne dass eine Beschädigung der Wandfläche erfolgt.

Durch die erfindungsgemäße Ausbildung des Montagesystems mit dem Befestigungselement ist eine einfache, sichere und schnelle Befestigung von unterschiedlichen Gegenständen an Wänden, Fußböden und Decken, an Metall- oder Glasfläche oder auch Spiegel ohne Bohrung durchführbar.
Ist in dem einen oder anderen Fall auf Grund der Beschaffenheit des Untergrundes (Wandfläche), z. B. eine Gipswand oder dergleichen Körper, die Befestigung nach der neuen Methode nicht möglich, so kann mit den neuen Grundkörpern, welche eine oder mehrerer Steigöffnungen oder Bohrungen aufweisen, deren Befestigung mittels einer oder mehrerer Schrauben erfolgen, welche durch die Öffnungen oder Bohrungen im Grundkörper durchführbar sind; es liegt jedoch auch im Rahmen der Erfindung wenn in den neuen Grundkörpern für derartige, hin und wieder notwendige, Befestigungen im Grundkörper weitere Durchgangsbohrungen oder Langlöcher vorgesehen sind.

Ein weiterer Vorteil der Erfindung besteht darin, dass dieses neue Montagesystem ohne weitere Anpassungsarbeiten auch für auf dem Markt befindliche Sanitärraum-Artikel bzw. Accessoires, wie z.B. Handtuchhalter, Spiegelhalter, Fönhalter, Konsolenhalterungen, Leuchten, Behälter für Waschemulsionen und dergleichen Artikel verwendbar ist. In bzw. für spezielle Anwendungsfälle kann der Grundkörper und das auf diesen abgestimmte Schutzelement auch eine andere als die runde Grundform besitzen, zum Beispiel eine ovale, prismatische, pyramiden-stumpfartige oder eine kombinierte oder weitere Grundform.

Das neue Montagesystem kann fertigungstechnisch durch sehr verschiedene Fertigungsverfahren hergestellt werden, wie z. B. Pressen oder Spritzen von Kunststoffen, Sintern, Drehen, Bohren, Fräsen, Umgießen und anderen Methoden, die einzeln oder kombiniert anwendbar sind. Dabei kann insbesondere der Grundkörper ein homogener Körper oder ein aus mehreren Einzelteilen zusammengefügter Körper sein.

Im Folgenden wird die Erfindung anhand von in Zeichnungen schematisch dargestellten Ausführungsbeispielen näher und in Details beschrieben. Es zeigen:
- Figur 1: ein erstes Ausführungsbeispiel eines Grundkörpers des Befestigungselementes im Schnitt;
- Fig. 1a: das in neuer Art an einer Wand angeordnete Befestigungselement gemäß Fig.1;
- Figur 2: den Grundkörper aus Figur 1 in Draufsicht;
- Figur 3: ein zweites Ausführungsbeispiel des Grundkörpers des Befestigungsmittels im Schnitt;
- Figur 4: den Grundkörper nach Figur 3 in Draufsicht;
- Figur 5: ein drittes Ausführungsbeispiel des Grundkörpers des Befestigungsmittels im Schnitt;
- Figur 6: den Grundkörper nach Figur 5 in Draufsicht;
- Figur 7: ein viertes Ausführungsbeispiel des Grundkörpers des Befestigungselementes im Schnitt;
- Figur 8: den Grundkörper nach Figur 7 in Draufsicht;
- Figur 9: entfällt;
- Figur 10: entfällt;
- Figur 11: ein weiteres Ausführungsbeispiel des Grundkörpers des Befestigungsmittels im Schnitt;
- Figur 12: den Grundkörper nach Figur 11 in Draufsicht;
- Figur 13: eine erste Ausführungsform eines Schutzelementes im Schnitt;
- Figur 14: eine zweite Ausführungsform eines Schutzelementes im Schnitt und
- Figur 15: eine dritte Ausführungsform eines Schutzelementes im Schnitt.

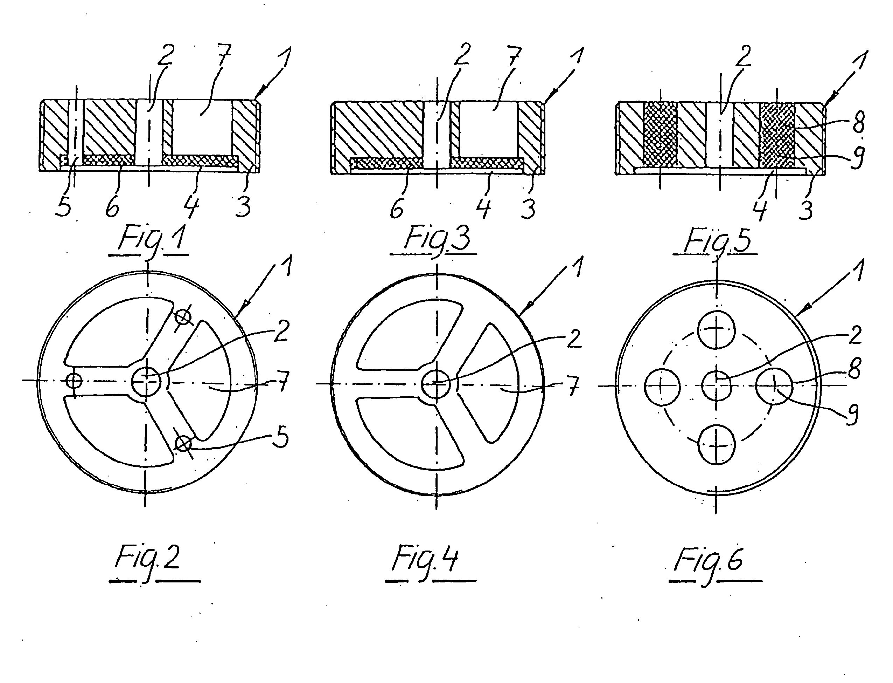

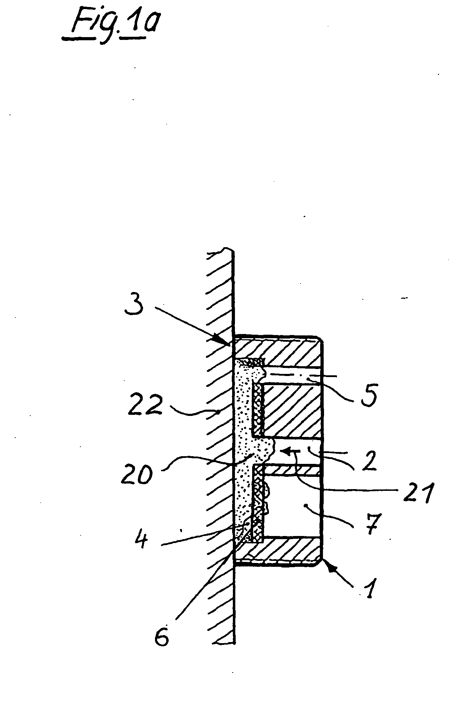

Die Figuren 1 bis 8, 11 und 12 zeigen einen Grundkörper 1 des erfindungsgemäßen Montagesystems in verschiedenen Ausführungen. Der Grundkörper 1 eines Befestigungselementes, der an einer in Fig. 1a gezeigten Wand 22, beispielsweise einer Kachel, zu befestigen ist, wird mittels eines hier nicht dargestellten Hafthilfsmittels zunächst an der Wand 22 vorpositioniert. Danach wird durch die im Grundkörper 1 angeordnete Einfüllöffnung 2 das Haft- bzw. Verbindungsmittel dosiert eingebracht. Das Haft- und Verbindungsmittel verteilt sich und breitet sich in der in der Rückseite 3 des Grundkörpers 1 angeordneten Ausnehmung 4 aus, bis der von der Ausnehmung 4 überdeckte Bereich der Wand 22 mit dem Haft- und Verbindungsmittel benetzt ist.

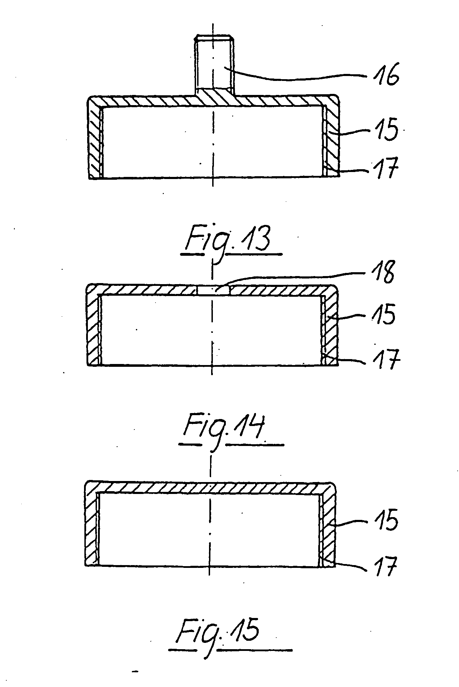

Der Grundkörper 1 ist vorteilhaft einteilig, rund und/oder aus Kunststoff ausgebildet und weist (Steig-)Öffnungen 5 auf, zwischen denen jeweils Durchbrüche 7 - hier drei - ausgebildet sind. Die von der Wand 22 abgewandte Vorderseite des Grundkörpers 1 wird nach der Befüllung des Grundkörpers 1 mit dem Haft- und Verbindungsmittel mittels eines, insbesondere kappenförmig ausgebildeten, Schutzelementes 15 abgedeckt - siehe Figur 13 bis 15 - und somit blickmäßig verschlossen und zugleich geschützt, so dass Wasser- und Kalkablagerungen und Schimmelbildung vorgebeugt wird, wobei das kappenförmige Schutzelement 15 ein Aufnahmeelement 16 zur Halterung von ortsfesten Gegenständen, wie Regalen, Handtuchhaltern, Leuchten, Befestigungshaltern oder dergleichen Ausstattungsartikeln, aufweist.

In dem in den Figuren 1 und 2 dargestellten Ausführungsbeispiel erfolgt das Abfließen des überschüssigen Haft- und Verbindungsmittels über die (Steig-)Öffnungen 5 im Grundkörper 1 und teilweise durch das in der Ausnehmung 4 in der Rückseite des Grundkörpers 1 angeordnete und mechanisch befestigte flüssigkeits- und gasdurchlässige Element 6, welches in Form einer Lochplatte oder einer ein- oder mehrlagigen Gaze-Einlage vorgesehen ist. Diese Lochplatte und die Gazeeinlage ermöglichen, dass das beim Aushärten des Haft-und Verbindungsmittels entstehende Gas entweichen kann. Dazu ist außerdem im Grundkörper 1 wenigstens ein zusätzlicher Durchbruche- 7 - hier drei - zwischen den Steigöffnungen 5 angeordnet. Gleichzeitig kann jedoch auch Umgebungsluft, insbesondere Luftfeuchte, zum Haft-und Verbindungsmittel gelangen, was bei Verwendung von Silikonklebern den Aushärtprozess beschleunigt.

In der in der Figur 3 und 4 dargestellten Ausführungsform des Grundkörpers 1 sind keine Steigöffnungen vorgesehen. Das überschüssige Haft- und Verbindungsmittel fließt bei dieser Ausführungsform des Grundkörpers 1 über das nach Innen und nach Außen flüssigkeits- und gasdurchlässige Element 6 ab.

Die Ausführungsform des Grundkörpers 1 entsprechend den Figuren 5 und 6 enthält im Grundkörper 1 vorzugsweise konzentrisch zur Einfüllöffnung 2 angeordnete Durchgangsbohrungen 8, in denen ein schwammartiges Material 9 vorgesehen ist. Dieses schwammartige Material 9 nimmt nach dem dosierten Einfüllen des Haft- und Verbindungsmittels durch die Einfüllöffnung 2 das überschüssige Haft- und Verbindungsmittel teilweise auf und ermöglicht sowohl das Entweichen der im Grundkörper 1 befindlichen Luft beim Einfüllen, als auch der beim Aushärten des Haft- und Verbindungsmittels entstehenden Gase und zudem den Durchtritt von Umgebungsluft zum Haft- bzw. Verbindungsmittel hin.

Wie bei den Ausführungen gemäß den Figuren 1 bis 4 ist auch hier, in der Ausführung gemäß den Figuren 5 und 6, das zu dem flüssigkeit- und gasdurchlässigen Element 6 hier alternativ eingesetzte schwammartige Material 9, mit dem Grundkörper 1 in geeigneter Weise auf bekannte Art mechanisch fest verbunden.

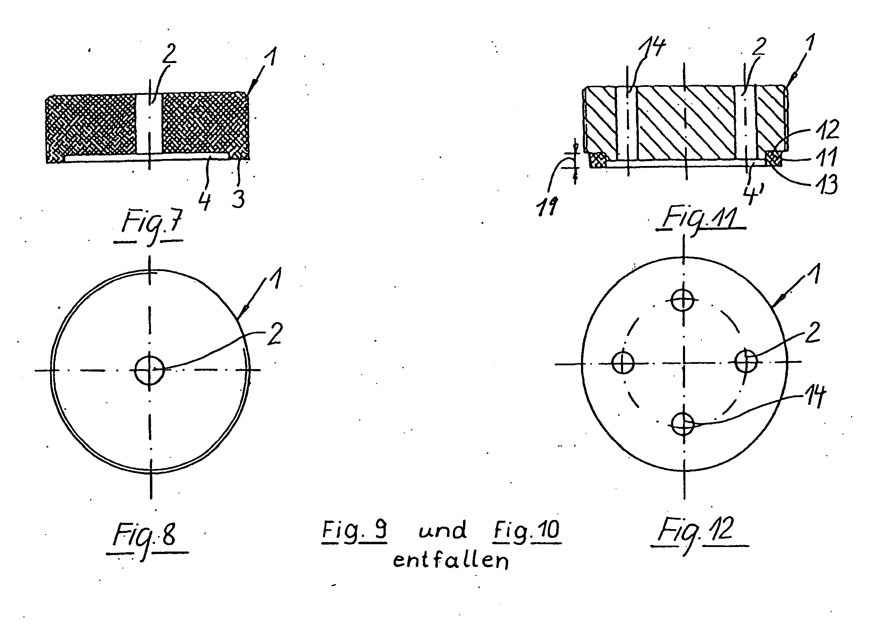

In einer weiteren Ausführungsform des Grundkörpers 1 entsprechend den Figuren 7 und 8 besteht der gesamte Grundkörper 1 aus einem offenporigen Material, welches das Entweichen der in der Ausnehmung des Grundkörpers 1 befindlichen Luft beim Füllen ermöglicht sowie des beim Aushärten des Haft- und Verbindungsmittels entstehenden Gases bzw. der entweichenden Bindemittel und den Kontakt von Umgebungsluft, einschließlich der in letzterer enthaltenen Luftfeuchte, mit dem Haft- und Verbindungsmittel und zugleich teilweise, d.h. in geringem Umfang, das überschüssige Haft- und Verbindungsmittel nach dessen Einfüllung über die Einfüllöffnung 2 in den Grundkörper 1 aufnimmt.

Bei der in den Figuren 11 und 12 dargestellten weiteren vorteilhaften Ausführungsform ist dem Grundkörpers 1 ein Ring 11 aus schwammförmigen Material zugeordnet, der in einer, vorzugsweise randnahen, Ausnehmung 12 in der Rückseite 3 des Grundkörpers 1 angeordnet ist. Dadurch, dass zumindest eine der Stirnflächen des Ringes 11 eine Klebefläche 13 aufweist, kann der Grundkörper 1 in bekannter Art vorfixiert werden. Durch die Dicke 19 des Ringes 11 wird die Ausnehmung 4' zwischen der Rückseite 3 des Grundkörpers 1 und einer nicht dargestellten Wand gebildet. Der Ring 11 ermöglicht ebenfalls aufgrund seiner schwammartigen, insbesondere hartschwammartigen, Materialstruktur das Entweichen der beim Aushärten des Haft- und Verbindungsmittels anfallenden Gase bzw. Bindemittel sowie den Kontakt von Umgebungsluft mit dem Haft- und Verbindungsmittel. Das überschüssige Haft- bzw. Verbindungsmittel fließt in insbesondere konzentrisch angeordnete (Steig-)Öffnungen 14, wobei die Einfüllöffnung 2 für das Haft- bzw. Verbindungsmittel nicht mittig im Grundkörper 1 angeordnet ist, sondern in bevorzugter Weise eine der radial angeordneten Steigöffnungen 14 sein kann.

Die Figuren 13 bis 15 zeigen Ausgestaltungen eines vorzugsweise kappenförmig ausgebildeten Schutzelementes 15. Das kappenförmig ausgebildetete Schutzelement 15 gemäß Figur 13 ist an seiner inneren Mantelfläche mit einem Gewinde 17 ausgestattet und kann mit selbigem 17 auf den Grundkörper 1 aufgeschraubt werden. Zusätzlich besitzt das Schutzelement 15, hier bevorzugt an seiner, von der Wand wegweisenden Oberfläche, ein ortsfestes Aufnahmeelement 16, welches kraft- und/oder formschlüssig an dem Schutzelement 15 befestigt ist. Dieses Aufnahmeelement 16 dient zur Verbindung mit einem Teil der Halterung eines handelsüblichen Gebrauchsgegenstandes für den Sanitärbereich, wie er weiter vorn bereits genannt wurde.
Das hier in Form eines Gewindebolzens gezeigte Aufnahmeelement 16 kann auch ein Teil einer Steckverbindung sein, z.B. ein Klippelement oder eine Führung, z.B. Schwalbenschwanzführung, die bezüglich Selbsthemmung verjüngt zulaufend ausgeführt ist, oder ein anderes Element bekannter Verbindungstechnik. Dieses Aufnahmeelement kann auch an der Mantelfläche des Schutzelementes 15 vorgesehen sein.

Die Ausführungsform des Schutzelementes 15 gemäß Figur 14 weist eine Durchgangsbohrung 18 auf, durch die ein nicht näher dargestelltes, an sich bekanntes Verbindungselement eines Sanitärartikels in den Grundkörper 1 eingebracht werden kann.

Figur 15 zeigt eine Ausführungsform des Schutzelementes 15, das nur als geschlossene Zierkappe vorgesehen ist, in die bei Bedarf auch Halteelemente, beispielsweise selbstschneidende Schrauben eingebracht werden können, die in der Regel auch in den Grundkörper eingreifen.

### Bezugsziffernverzeichnis

- 1: Grundkörper
- 2: Einfüllöffnung
- 3: Rückseite des Grundkörpers
- 4, 4': Ausnehmung in der Rückseite von Position 1
- 5: Öffnungen (Entlüftungs- oder Steigöffnungen)
- 6: flüssigkeits- und gasdurchlässiges Element
- 7: Durchbruch
- 8: Durchgangsbohrung
- 9: schwammartiges Material
- 10: Bohrung
- 11: Ring
- 12: Ausnehmung in der Rückseite
- 13: Klebefläche
- 14: Steigöffnung
- 15: Schutzelement
- 16: Aufnahmeelement
- 17: Gewinde im Schutzelement
- 18: Durchgangsbohrung im Schutzelement
- 19: Dicke von Position 11
- 20: Haft- bzw. Verbindungsmittel
- 21: Richtung der Einfüllung
- 22: Wand

## Patentansprüche

1. Montagesystem zur ortsfesten Anbringung von Gegenständen, wie Handtuchhaltern, Regalen, Leuchten oder dergleichen Ausstattungsartikel an einer Wand, Decke oder dgl. Fläche, insbesondere in mit Kacheln, Marmorplatten oder mit dergleichen Wandverkleidungen ausgestatteten Räumen, bestehend aus einem Befestigungselement und einem Haft- und Verbindungsmittel , wobei
- das Befestigungselement einen Grundkörper (1) aufweist und zur Aufnahme eines Elementes zur Halterung des Gegenstandes ausgebildet ist,
- der Grundkörper (1) an seiner zur Wand zeigenden Rückseite (3) eine Ausnehmung (4; 4') und eine in letztere (4; 4') einmündende Einfüllöffnung (2) besitzt, für die Einbringung des Haft- bzw. Verbindungsmittels zwischen das Befestigungselement und der Wand, und wobei
- das Befestigungselement für das Entweichen der von dem in die Ausnehmung (4; 4') eingebrachten Haft- bzw. Verbindungsmittel verdrängten Luft wenigstens eine flüssigkeits- und gasdurchlässige Öffnung besitzt , die von der Ausnehmung (4; 4') bis in eine weitere Oberfläche des Befestigungselementes reicht und die überschüssiges Haft- bzw. Verbindungsmittel aufnimmt,
***dadurch gekennzeichnet, dass***
der Grundkörper (1) und/oder die der Wand zugewandte Rückseite (3) des Grundkörpers (1) wenigstens in Teilbereichen aus einem offenporigen Material besteht und somit derart flüssigkeits- und gasdurchlässig ist, dass das beim Aushärten des in der Ausnehmung (4, 4') befindlichen Haft- und Verbindungsmittels entstehende Gas entweichen kann bzw. flüchtende Bindemittel ausdunsten können und zugleich Umgebungsluft an das sich in der Ausnehmung (4; 4') befindende Haft- und Verbindungsmittel gelangt.

2. Montagesystem nach Anspruch 1,
***dadurch gekennzeichnet***
**dass** an der von der Wand abgewandte Vorderseite des Grundkörpers (1) ein Schutzelement (15) lösbar angeordnet ist sodass nach der Befüllung des Grundkörpers (1) mit dem Haft- und Verbindungsmittel selbiger abdeckbar ist.

3. Montagesystem nach Anspruch 1 oder 2,
***dadurch gekennzeichnet,***
**dass** im Grundkörper (1) jeweils zwischen
(Steig-)Öffnungen (5), welche die beim Einfüllen des Haft- bzw. Verbindungsmittel verdrängte Luft abführen, Durchbrüche (7) vorgesehen sind.

4. Montagesystem nach wenigstens einem der Ansprüche 1 bis 3,
***dadurch gekennzeichnet,***
**dass** der/die flüssigkeits- und gasdurchlässigen Teilbereiche des Grundkörpers (1) von wenigstens einem, an letzterem (1) mechanisch befestigtem Element (6) gebildet sind.

5. Montagesystem nach Anspruch 4,
***dadurch gekennzeichnet,***
**dass** das Element (6) eine Lochplatte ist, die in der Ausnehmung (4) in der Rückseite (3) des Grundkörpers (1) angeordnet ist.

6. Montagesystem nach einem der Ansprüche 4 und 5
***dadurch gekennzeichnet,***
**dass** das in der Ausnehmung (4) in der Rückseite (3) des Grundkörpers (1) radial innenliegende flüssigkeits- und gasdurchlässige Element (6) als ein- oder mehrlagig ausgebildete Gaze-Einlage ausgebildete ist.

7. Montagesystem nach Anspruch 6,
***dadurch gekennzeichnet,***
**dass** bei Anordnung einer mehrlagig ausgebildeten Gaze-Einlage (6) in der Ausnehmung (4) der Rückseite (3) des Grundkörpers (1) keine (Steig-)Öffnungen (5) vorgesehen sind.

8. Montagesystem nach wenigstens einem der Ansprüche 1 bis 4,
***dadurch gekennzeichnet,***
**dass** im Grundkörper (1) konzentrisch zur Einfüllöffnung (2) mit einem schwammartigen bzw. hartschwammartigen, offenporigen Material (9) gefüllte Durchgangsbohrungen (8) angeordnet sind.

9. Montagesystem nach Anspruch 8,
***dadurch gekennzeichnet,***
**dass** die Durchgangsbohrungen (8) mit Gazematerial gefüllt sind.

10. Montagesystem nach wenigstens einem der Ansprüche 1 bis 9,
***dadurch gekennzeichnet,***
**dass** in einer Ausnehmung (12) der Rückseite (3) des Grundkörpers (1) ein Ring (11) aus schwammartigem, offenporigen Material vorgesehen ist, dessen Auflagefläche eine Klebfläche (13) aufweist, wobei dessen Dicke (19) die Begrenzung für eine Klebefuge bildet.

11. Montagesystem nach wenigstens einem der Ansprüche 2 bis 10,
***dadurch gekennzeichnet,***
**dass** das Schutzelement (15) kappenförmig ausgebildet ist und mit einem integrierten Koppelelement mit dem Grundkörper (1) wahlweise lösbar verbunden ist.

12. Montagesystem nach Anspruch 11,
***dadurch gekennzeichnet,***
**dass** an oder in mindestens einer der äußeren Flächen des Schutzelement (15) mindestens ein Aufnahmeelement (16) vorgesehen ist.

13. Montagesystem nach Anspruch 11 oder 12,
***dadurch gekennzeichnet,***
**dass** das Schutzelement (15) eine Durchgangsbohrung (18) aufweist, durch die ein Verbindungselement in den Grundkörper (1) einbringbar ist.

14. Montagesystem nach Anspruch 11,
***dadurch gekennzeichnet,***
**dass** das Schutzelement (15) als geschlossene Zierkappe ausgebildet ist.

15. Montagesystem nach Anspruch 11,
***dadurch gekennzeichnet,***
**dass** das Koppelelement des Schutzelementes (15) ein Gewinde (17) in der inneren Mantelfläche des Schutzelementes (15) ist.

16. Montagesystem nach wenigstens einem der Ansprüche 1 bis 10,
***dadurch gekennzeichnet,***
**dass** das Befestigungselement selbst das Aufnahmeelement für die besagten Ausstattungsartikel ist.

17. Montagesystem nach Anspruch 16,
***dadurch gekennzeichnet,***
**dass** der Grundkörper (1) des Befestigungselementes als Sonderformteil derart ausgebildet ist, dass die besagten Ausstattungsartikel direkt an selbigen (1) befestigt werden können.

## Claims

1. Mounting system for stationary mounting of articles, such as hand-towel holders, shelves, lights or like fittings, on a wall, ceiling or like surface, particularly in rooms fitted with tiles, marble slabs or like wall claddings, consisting of a fastening element and a sticking and connecting means, wherein
- the fastening element has a base body (1) and is constructed for reception of an element for mounting the article,
- the base body (1) has at its rear side (3) facing the wall a recess (4; 4') and a filling opening (2), which opens into the latter (4; 4'), for introduction of the sticking or connecting means between the fastening element and the wall, and wherein
- the fastening element has, for the escape of air displaced by the sticking or connecting means introduced into the recess (4; 4'), at least one liquid-permeable and gas-permeable opening which extends from the recess (4; 4') to a further surface of the fastening element and receives the excess sticking or connecting means,
**characterised in that** the base body (1) and/or the rear side (3) which faces the wall, of the base body (1) consists or consist at least in sub-regions of an open-pore material and thus is or are liquid-permeable and gas-permeable in such a manner that the gas arising during hardening of the sticking and connecting means disposed in the recess (4; 4') can escape or volatile binders can evaporate and at the same time ambient air reaches the sticking and connecting means disposed in the recess (4; 4').

2. Mounting system according to claim 1, **characterised in that** a protective element (15) is detachably arranged at the front side, which is remote from the wall, of the base body (1) so that after filling of the base body (1) with the sticking and connecting means the same can be covered.

3. Mounting system according to claim 1 or 2, **characterised in that** passages (7) are provided in the base body (1) respectively between (riser) openings (5) which conduct away the air displaced during the filling in of the sticking or connecting means.

4. Mounting system according to at least one of claims 1 to 3, **characterised in that** the liquid-permeable and gas-permeable sub-regions of the base body (1) are formed by at least one element (6) mechanically fastened to the latter (1).

5. Mounting system according to claim 4, **characterised in that** the element (6) is an apertured plate arranged in the recess (4) in the rear side (3) of the base body (1).

6. Mounting system according to one of claims 4 and 5, **characterised in that** the liquid-permeable and gas-permeable element (6) radially inwardly disposed in the recess (4) in the rear side (3) of the base body (1) is constructed as a gauze insert of single-layer or multi-layer construction.

7. Mounting system according to claim 6, **characterised in that** no (riser) openings (5) are provided when a gauze insert (6) of multi-layer construction is arranged in the recess (4) of the rear side (3) of the base body (1).

8. Mounting system according to at least one of claims 1 to 4, **characterised in that** passage bores (8) filled with a spongy or hard-spongy open-pore material (9) are arranged in the base body (1) concentrically with the filling opening (2).

9. Mounting system according to claim 8, **characterised in that** the passage bores (8) are filled with gauze material.

10. Mounting system according to at least one of claims 1 to 9, **characterised in that** a ring (11) of spongy open-pore material, the contact surface of which has an adhesive surface (13), is provided in a recess (12) of the rear side (3) of the base body (1), wherein the thickness (19) of the ring forms the boundary for a glue joint.

11. Mounting system according to at least one of claims 2 to 10, **characterised in that** the protective element (15) is of cap-shaped construction and is selectably detachably connected by an integrated coupling element with the base body (1).

12. Mounting system according to claim 11, **characterised in that** at least one receiving element (16) is provided at or in at least one of the outer surfaces of the protective element (15).

13. Mounting system according to claim 11 or 12, **characterised in that** the protective element (15) has a passage bore (18) through which a connecting element is introducible into the base body (1).

14. Mounting system according to claim 11, **characterised in that** the protective element (15) is constructed as a closed decorative cap.

15. Mounting system according to claim 11, **characterised in that** the coupling element of the protective element (15) is a thread (17) in the inner circumferential surface of the protective element (15).

16. Mounting system according to at least one of claims 1 to 10, **characterised in that** the fastening element itself is the receiving element for the said fitting.

17. Mounting system according to claim 16, **characterised in that** the base body (1) of the fastening element is constructed as a separate shaped part in such a manner that the said fitting can be directly fastened to the same (1).

## Revendications

1. Système de montage pour l'installation fixe d'objets tels que des porte-serviettes, des étagères, des lampes ou articles d'équipement similaires, sur une paroi ou un mur, un plafond ou surface analogue, notamment dans des locaux garnis de carreaux de faïence, de plaques de marbre ou de revêtements de parois similaires, comprenant un élément de fixation et un agent d'adhérence et de liaison, sachant que
- l'élément de fixation présente un corps de base (1) et est réalisé pour recevoir un élément de retenue de l'objet,
- ledit corps de base (1) possède, à sa face postérieure (3) pointant vers la paroi, un évidement (4 ; 4') et un orifice de remplissage (2) débouchant dans ce dernier (4 ; 4'), en vue de l'introduction de l'agent respectif d'adhérence ou de liaison entre l'élément de fixation et la paroi, et sachant que
- l'élément de fixation possède, en vue de l'échappement de l'air refoulé par l'agent respectif d'adhérence ou de liaison déversé dans l'évidement (4 ; 4'), au moins un orifice perméable aux liquides et aux gaz, qui s'étend depuis ledit évidement (4 ; 4') jusque dans une autre surface dudit élément de fixation, et recueille de l'agent respectif d'adhérence ou de liaison en excédent,
**caractérisé par le fait que**
le corps de base (1), et/ou la face postérieure (3) dudit corps de base (1) qui est tournée vers la paroi, consiste(nt), au moins dans des régions partielles, en un matériau à pores ouverts et offre(nt), de la sorte, une perméabilité aux liquides et aux gaz telle que le gaz, généré lors du durcissement de l'agent d'adhérence et de liaison situé dans l'évidement (4 ; 4'), puisse s'échapper ou bien que des liants volatils puissent respectivement s'évaporer, et que de l'air ambiant parvienne simultanément jusqu'audit agent d'adhérence et de liaison situé dans ledit évidement (4 ; 4').

2. Système de montage selon la revendication 1,
**caractérisé par le fait**
**qu'**un élément de protection (15) est placé amoviblement à la face antérieure du corps de base (1) tournée à l'opposé de la paroi, de telle sorte que ledit corps de base (1) puisse être recouvert par l'agent d'adhérence et de liaison à l'issue de l'emplissage dudit corps.

3. Système de montage selon la revendication 1 ou 2,
**caractérisé par le fait**
**que** des zones ajourées (7) sont respectivement prévues, dans le corps de base (1), entre des orifices (d'ascension) (5) qui évacuent l'air refoulé lors du déversement de l'agent respectif d'adhérence ou de liaison.

4. Système de montage selon au moins l'une des revendications 1 à 3,
**caractérisé par le fait**
**que** la/les région(s) partielle(s) du corps de base (1), perméable(s) aux liquides et aux gaz, est/sont formée(s) par au moins un élément (6) fixé mécaniquement audit corps (1).

5. Système de montage selon la revendication 4,
**caractérisé par le fait**
**que** l'élément (6) est une plaque perforée logée dans l'évidement (4) pratiqué dans la face postérieure (3) du corps de base (1).

6. Système de montage selon l'une des revendications 4 et 5,
**caractérisé par le fait**
**que** l'élément (6) perméable aux liquides et au gaz, occupant une position radialement intérieure dans l'évidement (4) pratiqué dans la face postérieure (3) du corps de base (1), est réalisé sous la forme d'une pièce intégrée en gaze à une ou plusieurs couche(s).

7. Système de montage selon la revendication 6,
**caractérisé par le fait**
**qu'**aucun orifice (d'ascension) (5) n'est prévu lorsqu'une pièce intégrée en gaze (6), réalisée à plusieurs couches, est disposée dans l'évidement (4) de la face postérieure (3) du corps de base (1).

8. Système de montage selon au moins l'une des revendications 1 à 4,
**caractérisé par le fait**
**que** des orifices de passage (8), comblés d'un matériau (9) à pores ouverts de type éponge ou éponge dure, sont façonnés dans le corps de base (1) concentriquement à l'orifice de remplissage (2).

9. Système de montage selon la revendication 8,
**caractérisé par le fait**
**que** les orifices de passage (8) sont comblés d'un matériau de type gaze.

10. Système de montage selon au moins l'une des revendications 1 à 9,
**caractérisé**
**par** la présence, dans un évidement (12) de la face postérieure (3) du corps de base (1), d'une bague (11) en un matériau à pores ouverts de type éponge dont la surface d'appui présente une surface d'adhérence (13), l'épaisseur (19) de ladite bague matérialisant la délimitation d'un joint à adhésif.

11. Système de montage selon au moins l'une des revendications 2 à 10,
**caractérisé par le fait**
**que** l'élément de protection (15) est réalisé en forme de capuchon et est relié au corps de base (1), de manière sélectivement libérable, par un élément d'accouplement intégré.

12. Système de montage selon la revendication 11,
**caractérisé**
**par** la présence d'au moins un élément récepteur (16) sur ou dans au moins l'une des faces extérieures de l'élément de protection (15).

13. Système de montage selon la revendication 11 ou 12,
**caractérisé par le fait**
**que** l'élément de protection (15) comporte un trou de passage (18) à travers lequel un élément de liaison peut être introduit dans le corps de base (1).

14. Système de montage selon la revendication 11,
**caractérisé par le fait**
**que** l'élément de protection (15) est réalisé sous la forme d'une coiffe décorative fermée.

15. Système de montage selon la revendication 11,
**caractérisé par le fait**
**que** l'élément d'accouplement de l'élément de protection (15) est un taraudage (17) façonné dans la surface périphérique intérieure dudit élément de protection (15).

16. Système de montage selon au moins l'une des revendications 1 à 10,
**caractérisé par le fait**
**que** l'élément de fixation constitue, par lui-même, l'élément récepteur destiné à l'article d'équipement précité.

17. Système de montage selon la revendication 16,
**caractérisé par le fait**
**que** le corps de base (1) de l'élément de fixation est réalisé sous la forme d'une pièce moulée spécifique, de telle sorte que les articles d'équipement précités puissent être fixés directement audit corps (1).
